# EUROPEAN PATENT APPLICATION

(11) **EP 0 930 770 A2**
(43) Date of publication of application: **21.07.1999**
(21) Application number: 98120503.2
(22) Date of filing: 29.10.1998
(51) Int. Cl.: H04N 1/00

(54) **Portable cellular phone having the function of a camera**

(30) Priority: 14.01.1998 JP 533198
(71) Applicant: MITSUBISHI DENKI KABUSHIKI KAISHA, Tokyo 100-8310 (JP)
(72) Inventor: Aoki, Toru, Chiyoda-ku, Tokyo 100 8310 (JP); Hamaguchi, Tadahiko, Chiyoda-ku, Tokyo 100 8310 (JP); Matoba, Narihiro, Chiyoda-ku, Tokyo 100 8310 (JP); Saito, Masayuki, Chiyoda-ku, Tokyo 100 8310 (JP); Kamo, Masayoshi, Chiyoda-ku, Tokyo 100 8310 (JP)
(74) Representative: Pfenning, Meinig & Partner

(57) **Abstract**

A portable cellular phone includes audio input means, transmission means for transmitting to a calling/called party audio information converted by the input means, character information input means, and character memory. The portable cellular phone further includes a digital camera which photographs an image and outputs image information, image memory which stores the image information, a system control section which links the image information of the digital camera or of the image memory to character information of the character memory, display means which displays linked information items, and changeover means which switches the image information received from the image memory to audio information in such a way that means for transmitting the audio information transmits the image information.

## Description

### BACKGROUND OF THE INVENTION

### 1. Field of the Invention

The present invention relates to a portable cellular phone which has the function of a camera and which performs acquisition, display, storage, and transmission of an image, such as a personal handy phone (PHS), a car phone or a portable cellular phone.

### 2. Description of the Related Art

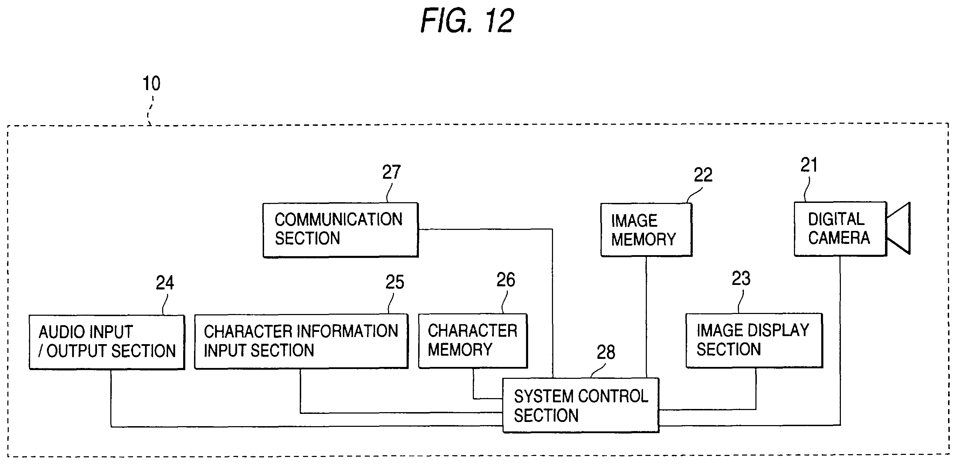

Figure 12 shows the configuration of an existing portable cellular phone 10 having the function of a camera, e.g., a data scope DS-320 or a visual phone adapter VP-110 manufactured by Kyocera Corporation. The existing portable cellular phone 10 shown in Figure 12 is used primarily for the purpose of transmitting audio or image information. The existing portable cellular phone 10 comprises a digital camera 21, an image display 23, image memory 22, a communication section 27, a character information input section 25, character memory 26, an audio input/output section 24, and a system control section 28. The operation of the portable cellular phone will now be described.

The digital camera 21 captures a portrait or a scenic shot and converts the thus-captured image into image information. The thus-converted image information is sent to the image memory 22 and the image display section 23 by way of the system control section 28. The image display section 23 can receive the image information from the digital camera 21 or the image information stored in the image memory 22, by way of the system control section 28, and can display the thus-received image information. Further, the image display section 23 can receive character information sent from character information input section 25 and the character information stored in the character memory 26, by way of the system control section 28.

The audio input/output section 24 carries out input/output of audio information in the same manner as does a typical portable cellular phone. The communication section 27 sends or receives image and audio information to or from terminal equipment, e.g., another portable cellular phone having the function of a camera. The system control section 28 has the function of controlling a round of functional operations.

In the existing portable cellular phone 10 having the foregoing configuration, there is no relevancy between image information and character information displayed on the image display section. The portable cellular phone 10 is unable to indicate on the image display section 23 image information such as a face image in association with character information such as a telephone number.

Since the digital camera 21 cannot be housed in the body of the portable cellular phone, the portable cellular phone suffers a problem of lacking compactness and of being susceptible to dust or physical shock.

### SUMMARY OF THE INVENTION

The present invention has been conceived to solve the foregoing problem, and the object of the present invention is to provide a compact, dust-proof, and shock-resistant portable cellular phone which has the function of a camera and which manages image information such as a face image in association with character information such as a telephone number and indicates these information items on a display.

According to a first aspect of the invention, there is provided a portable cellular phone having the function of a camera which has a housing accommodating audio input means, transmission means for transmitting to a called/calling party audio information converted by the input means, character information input means, and character memory, the portable cellular phone comprising:
a digital camera which photographs an image and outputs image information;
image memory which stores the image information photographed by the digital camera;
the image information output from the digital camera or the image information stored in the image memory;
a system control section which links the image information stored in the image memory to relevant character information;
display means for displaying the information items linked to each other; and
changeover means which switches the image information received from the image memory to audio information in such a way that means for transmitting the audio information transmits the image information.

The portable cellular phone having the function of a camera according to a second aspect of the invention is characterized by the feature that the digital camera can be housed in or withdrawn from the housing and can be rotated through 180 degrees in a vertical direction about a horizontal axis when it is withdrawn.

The portable cellular phone having the function of a camera according to a third aspect of the invention is characterized by the feature that the digital camera can be housed in or withdrawn from the housing and can be rotated through 180 degrees in a horizontal direction around a vertical axis when it is withdrawn.

The portable cellular phone having the function of a camera according to a fourth aspect of the invention is characterized by the digital camera being provided with an optical finder having a field of view oriented in the same direction as that of the camera's field of view.

The portable cellular phone having the function of a camera according to a fifth aspect of the invention is characterized by comprising display selection means for selecting either character or image information to be displayed on the display means.

The portable cellular phone having the function of a camera according to a sixth aspect of the invention is characterized by comprising addition means for adding audio information to the image information so that the audio information added to the image information can be transmitted to a called/calling party together with the image information.

The portable cellular phone having the function of a camera according to a seventh aspect of the invention is characterized by comprising selection means for displaying on the display means only an information item selected from the image information received from the digital camera and the image information received from the called/calling party.

The portable cellular phone having the function of a camera according to an eighth aspect of the invention is characterized by comprising image merging means which produces one composite image information item from a plurality of image information items stored in the image memory.

The portable cellular phone having the function of a camera according to a ninth aspect of the invention is characterized by comprising digital camera drive means for causing the digital camera to perform a photographing operation through use of a signal from the called/calling party, and transmission control means which controls the transmission means so as to send the image information acquired by the digital camera, in response to the signal received from the called/calling party.

The portable cellular phone having the function of a camera according to a tenth aspect of the invention is characterized by comprising an auxiliary storage medium which can be attached to or removed from the housing and which selectively stores contents of the image memory or the character memory or contents of both the image memory and the character memory.

### BRIEF DESCRIPTION OF THE DRAWINGS

Figure 1 is a block diagram showing the configuration of a portable cellular phone having the function of a camera according to a first embodiment of the present invention;
Figure 2 is a schematic representation showing the configuration of character memory, image memory, and character image management memory according to the first embodiment;
Figure 3 is a block diagram showing the configuration of a portable cellular phone having the function of a camera according to a second embodiment of the present invention;
Figure 4 is a table showing the configuration of comprehensive memory according to the second embodiment;
Figure 5 is a general view of a portable cellular phone having the function of a camera according to a third embodiment of the present invention;
Figures 6A and 6B are partially cross-sectional views showing the operation of the portable cellular phone according to the third embodiment;
Figure 7 is a block diagram showing the configuration of a portable cellular phone having the function of a camera according to a fourth embodiment of the present invention;
Figure 8 is a block diagram showing the configuration of a portable cellular phone having the function of a camera according to a fifth embodiment of the present invention;
Figure 9 is a block diagram showing the configuration of a portable cellular phone having the function of a camera according to a sixth embodiment of the present invention;
Figure 10 is a block diagram showing the configuration of a portable cellular phone having the function of a camera according to a seventh embodiment of the present invention;
Figure 11 is a block diagram showing the configuration of a portable cellular phone having the function of a camera according to an eighth embodiment of the present invention; and
Figure 12 is a block diagram showing the configuration of an existing portable cellular phone having the function of a camera.

### DETAILED DESCRIPTION OF THE PREFERRED EMBODIMENTS

Now, a description will be given in more detail of preferred embodiments of the invention with reference to the accompanying drawings.

### First Embodiment:

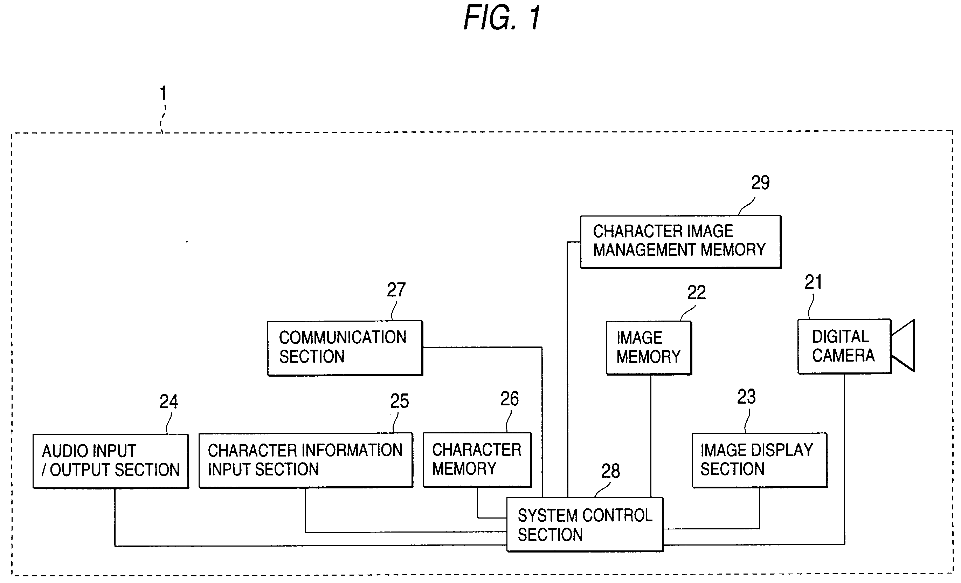

A portable cellular phone 1 having the function of a camera according to a first embodiment of the present invention will be described by reference to Figure 1.

In the portable cellular phone 1, an audio input/output section 24, a digital camera 21, an image display section 23, image memory 22, a character input section 25, and character memory 26 operate in the same manner as those of the existing portable cellular phone 10.

Reference numeral 27 designates a communication section which transmits or receives audio information, character information, and image information to or from another terminal device. Reference numeral 29 designates character image management memory which stores information linked to the character information and the image information. Reference numeral 28 designates a system control section having the function of controlling the operation of each section of the portable cellular phone 1, as well as the function of linking the character information stored in the character memory 26 to the image information stored in the image memory 22.

The digital camera 21 obtains image information by capturing the image of a person. The thus-obtained image information is sent to the image memory 22. The digital camera 21 is constituted of, e.g., a solid-state image pick-up element such as a CCD.

The image memory 22 has the function of storing the image information received from the digital camera 21 or the image information received by the communication section 27. The image memory 22 is constituted of, e.g., semiconductor memory.

The image display section 23 has the function of indicating image information received from the digital camera 21 or the image information stored in the image memory 22. The image display section 23 is constituted of, e.g., a liquid-crystal display device.

The audio input/output section 24 has the function of inputting or outputting the voice of the user of the portable cellular phone 1 and the function of transmitting and receiving audio information to or from the communication section 27. The audio input/output section 24 is constituted of, e.g., a transceiver of a telephone set, or a microphone and a speaker.

The character information input section 25 has the function of inputting character information such as a telephone number or the name of a calling/called party and the function of transmitting character information to the character memory 26 or the communication section 27. The character information input section 25 is constituted of, e.g., a key input pad or a keyboard.

The character memory 26 has the function of storing the character information sent from the character information input section 25 or the character information received from the communication section 27. The character memory 26 is constituted of, e.g., semiconductor memory.

In the present embodiment, the communication section 27 has the function of receiving the image information from the image memory 22, the character information from the character memory 26 or the character information input section 25, the information about the user's voice from the audio input/output section 24, as well as the function of sending the information items to another terminal device. The communication section 27 has incorporated therein changeover means (not shown) for switching a transmission method according to each of the information items.

The communication section 27 has the function of receiving the image information, the character information, and the audio information, as well as the function of sending the information items respectively to the image memory 22, the character memory 26, and the audio input/output section 24. As in the case of transmission, the communication section 27 switches a receiving method according to each of the information items, by means of the changeover means. The communication means 27 is constituted of, e.g., a data communication circuit.

In the present embodiment, the portable cellular phone has the character image management memory 29 for storing character image management information used for linking character information to image information. The character image management memory 29 is capable of managing image information, such as an image of the face, and character information, such as a telephone number in association with each other, is capable of indicating these information items on the image display section 23.

The system control section 28 has the function of linking the character information stored in the character memory 26 to the image information stored in the image memory 22, and the function of storing in the character image management memory 29 character image management information representing relevancy between the information items. Further, the system control section 28 has the function of reading relevant character information and image information from the character image management information stored in the character image management memory 29, and the function of sending the thus-read character and image information to the image display section 23 or the communication section 27.

The system control section 28 has the function of controlling the operation of individual sections of the portable cellular phone 1, and the function of controlling the flow of information among the individual sections. The system control section 28 is constituted of, e.g., a CPU and its peripheral circuitry.

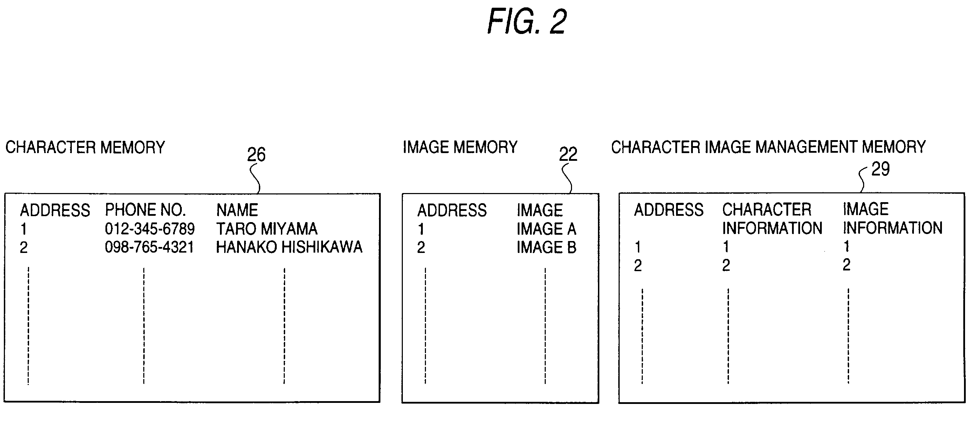

Figure 2 shows the configuration of content items of the character memory 26, those of the image memory 22, and those of the character image management memory 29. As shown in Figure 2, the character memory 26 stores character information, e.g., telephone numbers and their relevant names. The image memory 22 stores image information, e.g., an image of the face. The character image management memory 29 is constituted of, e.g., semiconductor memory, and stores character image management information for linking the character information stored in the character memory 26 to the image information stored in the image memory 22.

The character information is one input from, e.g., the character information input section 25, and the image information is one captured by means of, e.g., the digital camera 21. For example, the character information and the image information are indicated on the image display section 23, and an address of the character memory 26 and that of the image memory 22 are stored by means of the character information input section 25 in such a way as to link character information to relevant image information. The system control section 28 produces character image management information from addresses which link together the character information and the image information input from the character information input section 25. The thus-produced character image management information is stored in the character image management memory 29. For example, as can be seen from the character image management memory 29 shown in Figure 2, the character image management information comprises an address of character information within the character memory 26 and an address of image information within the image memory 22. With such a configuration, the character information and the image information can be managed while they are linked together.

In an ordinary portable cellular phone, only character information, e.g., the telephone number and name of a calling/called party, is displayed. In the present embodiment, character information, e.g., the telephone number and name of a calling/called party, and associated image information, e.g., an image of the face, are simultaneously indicated on the image display section 23, enabling the user to select a calling/called party on the basis of the image information such as an image of the face, as well as to retrieve character information such as a telephone number and a name in association with the image information.

With such a configuration, the character information, the image information, and the audio information can be sent to and received from one communication section 27, so long as the portable cellular phone is provided with the character image management memory 29 and the character image management information is managed by means of the system control section 28. As a result, character information can be efficiently retrieved by utilization of visual image information.

### Second Embodiment:

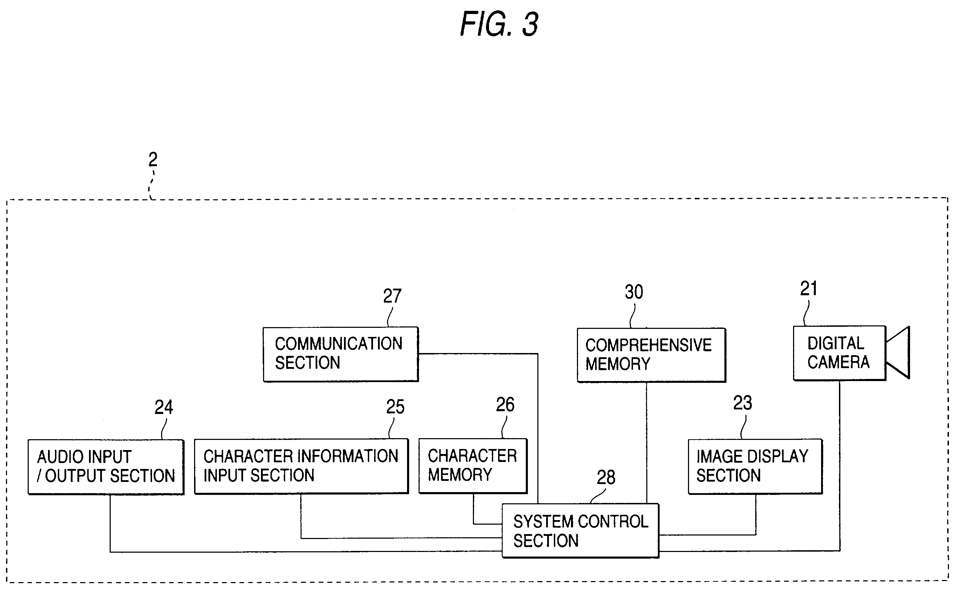

A portable cellular phone having the function of a camera according to a second embodiment of the present invention will now be described by reference to Figure 3.

The audio input/output section 24, the communication section 27, the digital camera 21, the image display section 23, the character information input section 26, and the system control section 28 of a portable cellular phone 2 having the function of a camera operate in the same manner as do those of the portable cellular phone 1 according to the first embodiment.

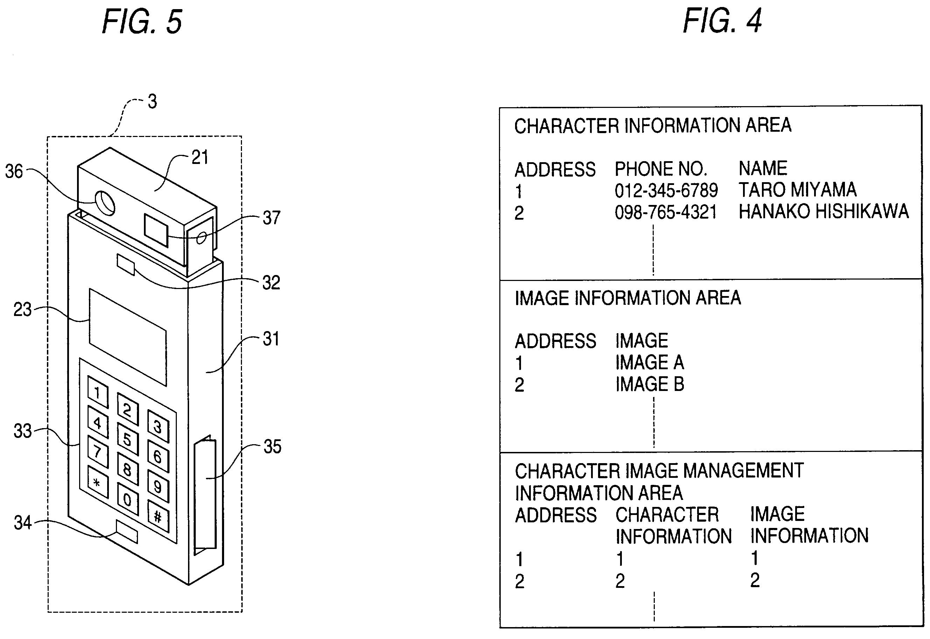

In the second embodiment, the character memory 26, the image memory 22, and the character image management memory 29 shown in Figure 1 are grouped into one comprehensive memory 30. For example, the comprehensive memory 30 comprises semiconductor memory. Figure 4 shows the configuration of contents of the comprehensive memory 30. The comprehensive memory 30 is divided into a character image information area, a character information area, and an image information area.

The character image management information area has the same configuration as that of the character image management memory 29 shown in Figure 2. The character information area has the same configuration as the character memory shown in Figure 2. The image information area has the same configuration as the image memory 22 shown in Figure 2.

The memory divided into three area are grouped into one memory, enabling a reduction in the area required to package memory and rendering the portable cellular phone compact.

### Third Embodiment:

Figure 5 shows the configuration of a portable cellular phone 3 having the function of a camera.

In Figure 5, reference numeral 31 designates a housing for housing the overall portable cellular phone; 23 designates an image display section for indicating an image; 32 designates a speaker for outputting sound; 33 designates a key input pad used for entering various types of information such as telephone numbers; 34 designates a microphone used for entering sound; 35 designates a magnetic card which is a removable auxiliary storage medium; 21 designates a digital camera for capturing an object to be photographed; 36 designates a lens section for imaging the image of the object to be photographed on an image pick-up element (not shown) provided within the digital camera; and 37 designates an optical finder for determining the object to be photographed.

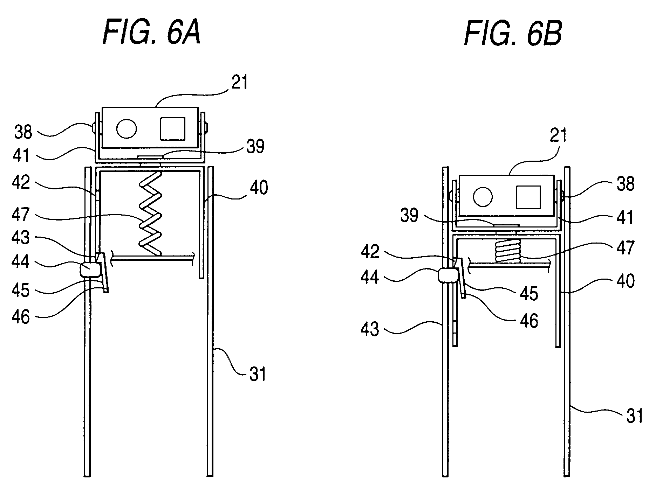

Figures 6A and 6B are cross-sectional views showing the way in which the digital camera 21 is housed in the portable cellular phone 3 shown in Figure 5. Figure 6A shows the digital camera 21 when it is withdrawn from the housing, and Figure 6B shows the digital camera 21 when it is housed in the housing. In Figures 6A and 6B, reference numeral 38 designates a vertical rotary support; 39 designates a horizontal rotary support; 40 designates a vertical movable portion; 41 designates a horizontal movable portion; 42 designates a lock hole A; 43 designates a lock hole B; 44 designates an unlock button; 45 designates a vertical metal fixture; 46 designates a metal fixture support; and 47 designates a spring.

The operation of the portable cellular phone will now be described.

First, in a case where the portable cellular phone 3 according to the second embodiment is used as a single telephone unit, the digital camera 21 is usually housed as shown in Figure 6B. When the digital camera is housed in the housing, a lock of the vertical metal fixture 45 is situated in the lock hole A 42. The digital camera 21 is housed in the housing 31 primarily for the purpose of protecting the camera from physical shock or dust. Even in a state in which the digital camera is withdrawn from the housing 31 as shown in Figure 6A, the telephone function of the portable cellular phone can be used. The portable cellular phone as a single telephone unit operates in the same manner as does an ordinary portable cellular phone.

Next, in a case where the portable cellular phone 3 is used as a digital camera, the unlock button 44 is pressed while the digital camera 21 is housed as shown in Figure 6B, so that the digital camera 21 is withdrawn as shown in Figure 6A. The lock of the vertical metal fixture 45 is situated in the lock hole B 43.

When an object to be photographed is photographed by the digital camera 21, the user holds the portable cellular phone 3 while directing it to the user so that the user can check the image display section 23. Next, the lens 36 is directed to the object to be photographed. At this time, in the digital camera 21, the horizontally movable section 41 is horizontally rotatable through 180 degrees about a vertical axis by way of the horizontal rotary support 39, and the vertically movable section 40 is vertically rotatable through 180 degrees about a horizontal axis by way of the vertical rotary support 38. The digital camera can be set to an arbitrary angular position within the range of angle. As a result, the lens 36 can be directed to the object to be photographed when the object is located in any direction relative to the portable cellular phone 3.

For example, in a case where scenery or a person other than the user is photographed, the lens 36 is oriented to the direction opposite to the image display section 23. In contrast, in a case where the user's face is photographed, the lens 36 is directed to the same direction in which the image display section 23 is oriented.

The image information acquired by the digital camera 21 is stored in the image memory 22.

In a case where the digital camera 21 is accommodated in the housing after the use of the camera has been completed, an upper portion of the digital camera 21 is pressed while pressing the unlock button 44, thus inserting the lock of the vertical metal fixture 45 into the lock hole A 42.

The user uses the optical finder 37 to check the extent to which an image is photographed while one of his eyes is fitted to the finder. The user can readily check the extent to which an image is photographed without viewing the image display section.

The image memory 22 and the character memory 26 may be constituted of, e.g., semiconductor memory . Since these memory heavy chain chimericonstituted of, e.g., semiconductor memory. Since these memory devices are incorporated in the housing of the portable cellular phone 3, the storage capacity of the memory is limited. For example, the image memory 22 can store only about tens of photographs with regard to image information regarding the object photographed by the digital camera 21. However, image information regarding the object newly photographed must be updated, if necessary. For this reason, the portable cellular phone 3 shown in Figure 5 is configured so that it can be connected to the magnetic card 35 serving as an auxiliary storage medium. The image information stored in the image memory 22, the image information which has been received by means of the telephone function and is stored in the image memory 22, and the character information stored in the character memory 26 can be copied to and stored in the magnetic card 35. When the storage capacity of one magnetic card 35 is exceeded, the magnetic card 35 is removable and can be replaced with another magnetic card.

In addition to the magnetic card 35 previously mentioned in the third embodiment, a floppy disk, a memory card comprising flash memory, a removable hard disk whose storage capacity can be increased, or a magneto-optic disk can also be used.

As mentioned previously, the digital camera 21 is housed in the housing 31 of the portable cellular phone 3 according to the present embodiment, thus resulting in an advantage of protecting the digital camera from physical shock or dust.

Since the digital camera 21 is rotatable in any direction in either a vertical or horizontal direction, the camera has the advantage of being able to readily photograph an arbitrary object such as scenery, a person, or the user's face.

The magnetic card 35 serving as the auxiliary storage medium can store various types of information such as information regarding a photographed image, a large volume of information can be stored. Further, the portable cellular phone has the advantage of transferring information by attaching the auxiliary storage medium to a personal computer having a unit for driving the auxiliary storage medium.

Further, the optical finder 37 provided for the portable cellular phone enables the user to check an object to be photographed without use of the image display section 32, resulting in the advantage of a reduction in the power dissipated by the image display section 23 as well as in power consumption of the overall portable cellular phone.

### Fourth Embodiment:

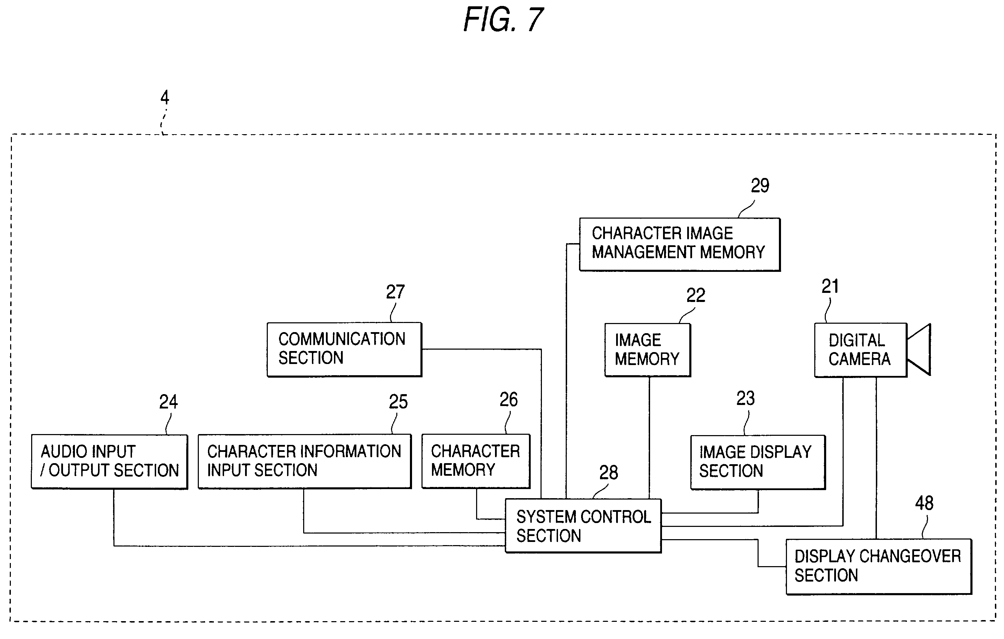

A portable cellular phone 4 having the function of a camera according to a fourth embodiment of the present invention will now be described by reference to Figure 7.

The audio input/output section 24, the communication section 27, the digital camera 21, the image display section 23, the image memory 22, the character information input section 25, the character memory 26, the character image management memory 29, and the system control section 28 of the portable cellular phone 4 operate in the same manner as do those of the portable cellular phone 1 according to the first embodiment shown in Figure 1.

In the fourth embodiment, a display switch section 48 is provided between the system control section 28 and the image display section 23. The display switch section 48 switches an image to be displayed on the image display section 23. Three types of images, namely, an image comprising only character information, an image comprising only image information, and an image comprising character information linked to image information, can be displayed on the image display section 23. The character information input by way of the character information input section 25 determines which of images is displayed.

With the foregoing configuration, the image to be indicated on the image display section 23 can be switched, enabling selective indication of information which the user desires to see.

### Fifth Embodiment:

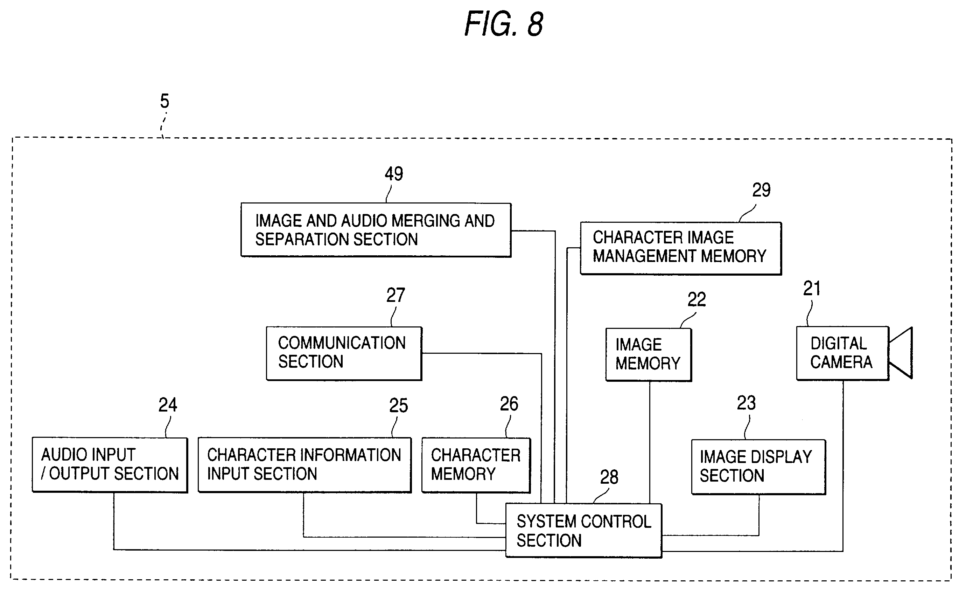

A portable cellular phone 5 having the function of a camera according to a fifth embodiment of the present invention will be described by reference to Figure 8.

The audio input/output section 24, the communication section 27, the digital camera 21, the image display section 23, the image memory 22, the character information input section 25, the character memory 26, the character image management memory 29, and the system control section 28 of the portable cellular phone 5 operate in the same manner as do those of the portable cellular phone 1 according to the first embodiment shown in Figure 1.

In the fifth embodiment, the portable cellular phone is newly provided with an image and voice merging and separation section 49. The image and voice merging and separation section 49 has the function of transmitting to the communication section 27 the audio information input from the audio input/output section 24 and the image information photographed by the digital camera 21 or the image information stored in the image memory 22, while the information items are linked together. With such a configuration, the image information can be sent together with the audio information.

The image and audio merging and separation section 49 has the function of separating the information which is received by means of the communication section 27 and comprises the audio information linked to the image information. The thus-separated audio information is sent to the audio input/output section 24, and the image information is sent to the image memory 22 or the image display section 23. With such a configuration, the information_which comprises image information linked with the audio information_can be received.

As a result of the image information being handled while being linked to the audio information in the manner as mentioned above, there can be provided information which is visually and audibly easy to understand.

### Sixth Embodiment:

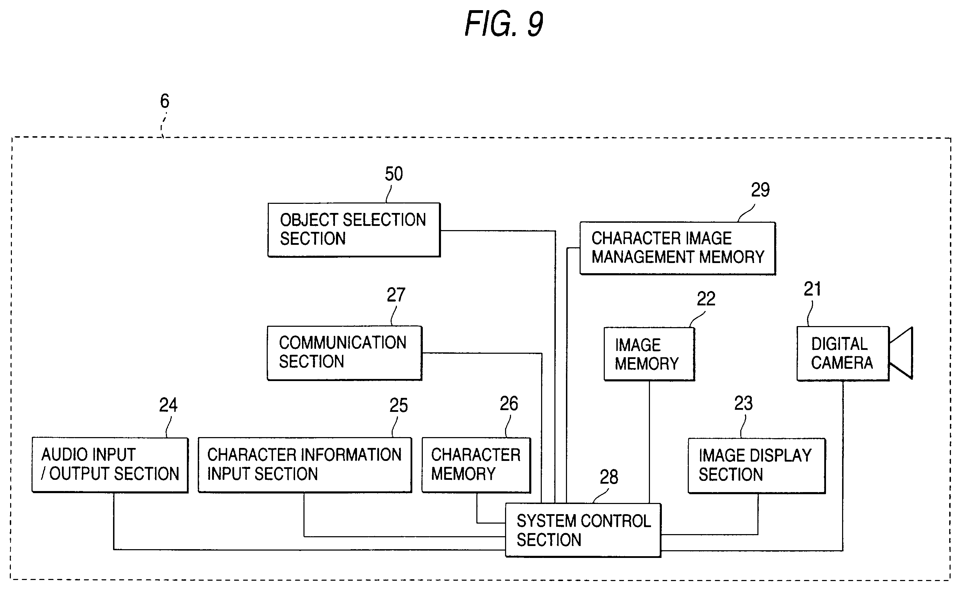

A portable cellular phone 6 having the function of a camera according to a sixth embodiment of the present invention will be described by reference to Figure 9.

The audio input/output section 24, the communication section 27, the digital camera 21, the image display section 23, the image memory 22, the character information input section 25, the character memory 26, the character image management memory 29, and the system control section 28 of the portable cellular phone 6 operate in the same manner as do those of the portable cellular phone 1 according to the first embodiment shown in Figure 1.

In the sixth embodiment, the portable cellular phone is newly provided with an object selection section 50. The object selection section 50 can selectively clip the face from the image information, e.g., an image face, through use of an image processing operation such as a profile extraction operation. Further, the object selection section 50 is capable of enhancing the characteristic portion of an image by deforming the image information, e.g., an image face. The image information clipped or deformed by means of the object selection section 50 is stored in the image memory 22 and is indicated on the image display section 23, as required.

With such a configuration, a characteristic portion of the image information, e.g., an image face, can be displayed in an enhanced manner, enabling displaying of an image which is visually easy to understand.

### Seventh Embodiment:

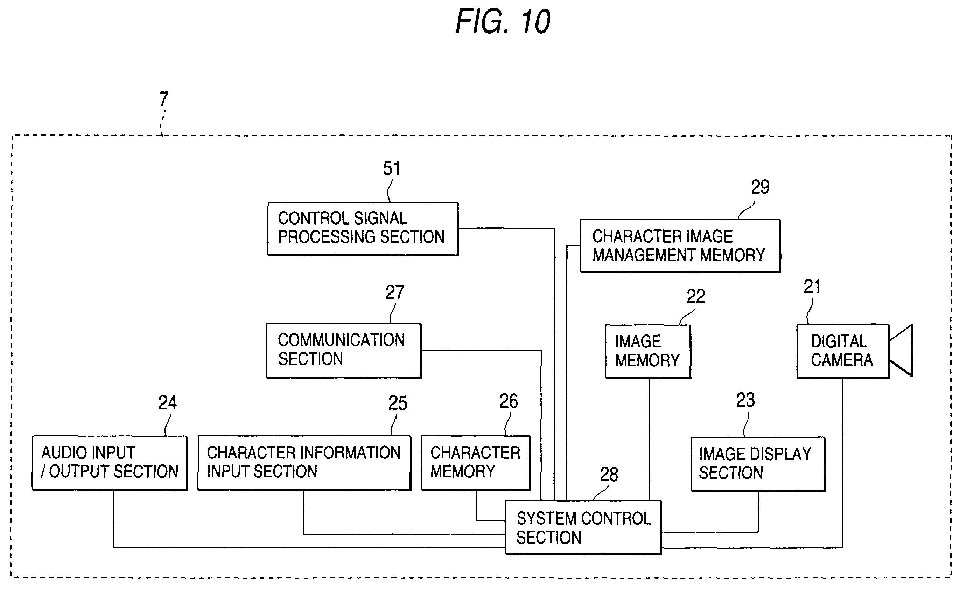

A portable cellular phone 7 having the function of a camera according to a seventh embodiment of the present invention will be described by reference to Figure 10.

The audio input/output section 24, the communication section 27, the digital camera 21, the image display section 23, the image memory 22, the character information input section 25, the character memory 26, the character image management memory 29, and the system control section 28 of the portable cellular phone 7 operate in the same manner as do those of the portable cellular phone 1 according to the first embodiment shown in Figure 1.

In the seventh embodiment, the portable cellular phone 7 is newly provided with a control signal processing section 51. The communication section 27 receives from another terminal device a control signal which includes a signal for driving the portable cellular phone 7. The control signal processing section 51 receives the control signal transmitted from the communication section 27. The control signal processing section converts the control signal into a signal for driving the digital camera 21 of the portable cellular phone 7, and the thus-converted control signal is transmitted to the system control section 28. On the basis of the drive signal, the system control section 28 can cause the portable cellular phone 7 to photograph an image, to store an image, or to transmit an image.

With such a configuration, it is possible to cause another terminal device to actuate the digital camera 21 of the portable cellular phone 7 according to the seventh embodiment.

The control signal processing section 51 is capable of transmitting a control signal for controlling another portable cellular phone 7 having the function of a camera. For example, the control signal is formed by the control signal processing section 51 converting character information for controlling another portable cellular phone 7 input from the character input section.

According to the seventh embodiment, with such a configuration, it is possible for the portable cellular phone 7 to operate another portable cellular phone 7 having the function of a camera.

With such a configuration, the portable cellular phone having the function of a camera can be operated from a distant place, enabling use of the portable cellular phone in another application such as a monitor camera.

### Eighth Embodiment:

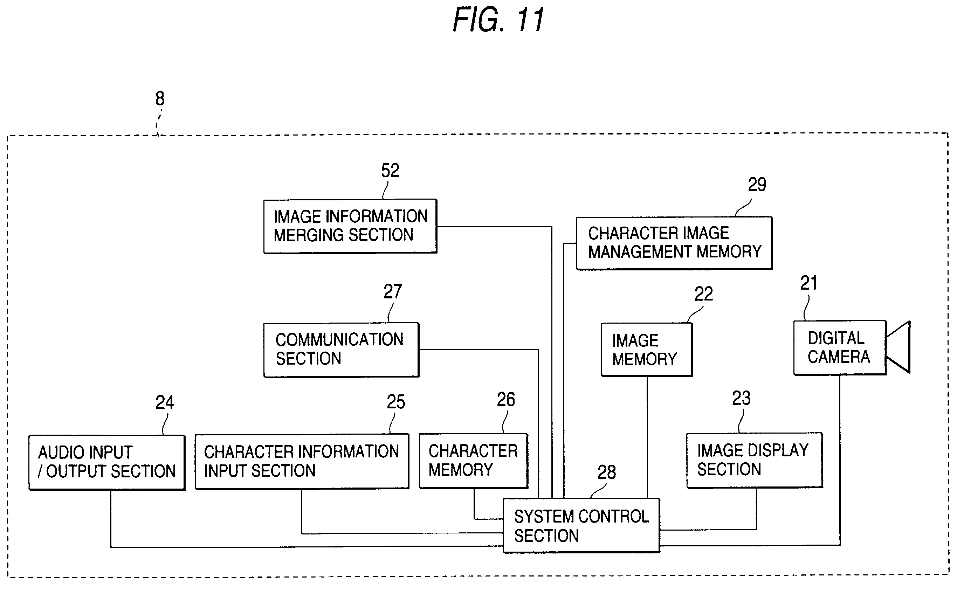

Figure 11 is a block diagram showing the configuration of a portable cellular phone 8 having the function of a camera according to an eighth embodiment of the present invention.

In the eighth embodiment, the portable cellular phone 8 is provided with an image information merging section 52 and is capable of merging into one image information item a plurality of image information items which are stored in the image memory 22 beforehand. For example, the image information merging section 52 is capable of merging, e.g., upper bodies of two persons as if it were one photographic image. Therefore, two types of upper-body images photographed at different locations and at different times can be merged as if they were photographed at the same time. Further, a scenic view and a portrait or two types of scenic views may be merged into one photograph.

Besides merging two image information items stored in the image memory 22 into one information item, the image information merging section 52 is also capable of converting the character information stored in the character memory 26 into a bit-map image, as well as capable of merging the thus-converted bit-map image and one image information stored in the image memory 22 into one information item.

As has been mentioned above, the image information merging section 52 is capable of producing a new image information item from the image information stored in the image memory 22 and the character information stored in the character memory 26.

As has been described above, the first aspect of the invention enables one communication section to receive audio information, character information, and image information by switching a transmission/receiving method according to audio information, character information, and image information. By providing a portable cellular phone with a character image management memory for managing character information and image information in association with each other, the character information and the image information can be managed while they are linked together, thus enabling efficient retrieval of character information by utilization of visual image information.

The second aspect of the invention yields the advantage of protecting a digital camera from physical shock or dust by enabling housing and withdrawal of the camera in and from a housing. Further, when the digital camera is withdrawn from the housing, the camera is vertically rotatable through 180 degrees about a horizontal axis, thus yielding the advantage of being able to readily photograph an arbitrary object, such as scenery, a person, or the user's face, without moving the portable cellular phone.

The third aspect of the invention yields the advantage of enabling the digital camera to be housed into or withdrawn from a housing, as well as the advantage of protecting the digital camera from physical shock or dust. When the digital camera is withdrawn from the housing, the camera is horizontally rotatable through 180 degrees about a vertical axis, thus yielding the advantage of being able to readily photograph an arbitrary object, such as scenery, a person, or the user's face, without moving the portable cellular phone.

According to the fourth aspect of the invention, there is fixed an optical finder having a field of view oriented in the same direction as that of the camera's field of view. As a result, the extent in which an image is photographed can be determined without use of the image display section, thus enabling power saving.

According to the fifth aspect of the invention, a display changeover section which switches an image to be indicated on the image display section is newly provided between a system control section and an image display section, thus enabling switching of an image to be indicated on the image display section, as well as selective indication of information which the user desires to see.

According to the sixth aspect of the invention, the portable cellular phone is newly provided with an image and audio merging and separation section which links audio information to image information and which separates these information items from each other. As a result, image information can be transmitted while being attached with audio information, thus enabling provision of information which is visually and audibly easy to understand.

According to the seventh aspect of the invention, the portable cellular phone is provided with an object selection section which selectively clips the face from image information, e.g., an image face, image information, e.g., an image face, can be displayed in an enhanced manner, thus enabling indication of an image which is visually easy to understand.

According to the eighth aspect of the invention, the portable cellular phone is provided with an image information merging section which merges a plurality of image information items previously stored in image memory into one information item. As a result, images regarding the upper parts of two persons are merged into one information item as if the information item looked like one photographic image. It is possible to create a new image information item by pasting character information on a portrait.

According to the ninth aspect of the invention, the portable cellular phone is newly provided with a control signal processing section for sending to the system control section a control signal which is received by the communication section and is converted into a signal for controlling the operation of the portable cellular phone. As a result, the portable cellular phone having the function of a camera according to the ninth aspect of the invention can be operated by way of another terminal, enabling use of the portable cellular phone in another application such as a monitor camera.

According to the tenth aspect of the invention, the portable cellular phone is provided with an auxiliary storage medium for memorizing and storing the image information photographed by the digital camera or the image and character information received from another terminal by means of the telephone function. As a result, when the storage capacity of one auxiliary storage medium is exceeded, the medium can be replaced with another auxiliary storage medium, thus enabling shooting of a desired number of photographs without regard to the magnitude of image and character memory.

## Claims

1. A portable cellular phone having the function of a camera which has a housing accommodating audio input means, transmission means for transmitting the audio information converted by the input means to a called/calling party, character information input means, and character memory, the portable cellular phone comprising:
a digital camera for photographing an image and outputs image information;
image memory for storing the image information photographed by the digital camera;
the image information output from the digital camera or the image information stored in the image memory;
a system control section which links the image information stored in the image memory to relevant character information;
display means for displaying the information items linked to each other; and
changeover means for switching the image information received from the image memory to audio information in such a way that means for transmitting the audio information transmits the image information.

2. The portable cellular phone having the function of a camera as defined in Claim 1, wherein the digital camera can be housed in or withdrawn from the housing and can be rotated through 180 degrees in a vertical direction when it is withdrawn.

3. The portable cellular phone having the function of a camera as defined in Claim 1, wherein the digital camera can be housed in or withdrawn from the housing and can be rotated through 180 degrees in a horizontal direction when it is withdrawn.

4. The portable cellular phone having the function of a camera as defined in Claim 1, wherein the digital camera is provided with an optical finder having a field of view oriented in the same direction as that of the camera's field of view.

5. The portable cellular phone having the function of a camera as defined in Claim 1, further comprising display selection means for selecting either character or image information to be displayed on the display means.

6. The portable cellular phone having the function of a camera as defined in Claim 1, further comprising addition means for adding audio information to the image information so that the audio information added to the image information can be transmitted to a called/calling party together with the image information.

7. The portable cellular phone having the function of a camera as defined in Claim 1, further comprising selection means for displaying on the display means only an information item selected from the image information received from the digital camera and the image information received from the called/calling party.

8. The portable cellular phone having the function of a camera as defined in Claim 1, further comprising image merging means which produces one composite image information item from a plurality of image information items stored in the image memory.

9. The portable cellular phone having the function of a camera as defined in Claim 1, further comprising digital camera drive means for causing the digital camera to perform a photographing operation through use of a signal from the called/calling party, and transmission control means which controls the transmission means so as to send the image information acquired by the digital camera, by means of the signal received from the called/calling party.

10. The portable cellular phone having the function of a camera as defined in Claim 1, further comprising an auxiliary storage medium which can be attached to or removed from the housing and which selectively stores contents of the image memory or the character memory or contents of both the image memory and the character memory.
